(19) Europäisches Patentamt
European Patent Office
Office européen des brevets

(11) **EP 3 210 045 B1**

(12) **FASCICULE DE BREVET EUROPEEN**

(45) Date de publication et mention
de la délivrance du brevet:
**04.11.2020 Bulletin 2020/45**

(51) Int Cl.:
***G01T 1/167*** *(2006.01)*

(21) Numéro de dépôt: **15781972.3**

(22) Date de dépôt: **21.10.2015**

(86) Numéro de dépôt international:
**PCT/EP2015/074392**

(87) Numéro de publication internationale:
**WO 2016/062775 (28.04.2016 Gazette 2016/17)**

(54) **PROCÉDÉ D'IDENTIFICATION D'UN ISOTOPE, PROGRAMME POUR L'IDENTIFICATION D'UN ISOTOPE ET DISPOSITIF D'IDENTIFICATION D'ISOTOPES**

VERFAHREN ZUR IDENTIFIZIERUNG EINES ISOTOPS, PROGRAMM ZUR IDENTIFIZIERUNG EINES ISOTOPS UND VORRICHTUNG ZUR IDENTIFIZIERUNG VON ISOTOPEN

METHOD FOR IDENTIFYING AN ISOTOPE, PROGRAM FOR IDENTIFYING AN ISOTOPE AND DEVICE FOR IDENTIFYING ISOTOPES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2014 FR 1460162**

(43) Date de publication de la demande:
**30.08.2017 Bulletin 2017/35**

(73) Titulaire: **Commissariat à l'Énergie Atomique et aux Énergies Alternatives
75015 Paris (FR)**

(72) Inventeurs:
• **CORRE, Gwenole**
  **91190 Saint-Aubin (FR)**
• **BOUDERGUI, Karim**
  **28630 Nogent-le-Phaye (FR)**
• **KONDRASOVS, Vladimir**
  **91120 Palaiseau (FR)**
• **SANNIE, Guillaume**
  **92130 Issy-les-Moulineaux (FR)**

(74) Mandataire: **Brevalex
95, rue d'Amsterdam
75378 Paris Cedex 8 (FR)**

(56) Documents cités:
**WO-A1-2014/016550 WO-A2-2006/036425
US-A1- 2005 029 460 US-A1- 2007 108 379**

• **SCHONFELD E ET AL: "DETERMINATION OF NUCLIDE CONCENTRATIONS IN SOLUTIONS CONTAINING LOW LEVELS OF RADIOACTIVITY BY LEAST-SQUARES RESOLUTION OF THE GAMMA-RAY SPECTRA", NUCLEAR INSTRUMENTS AND METHODS,, vol. 45, no. 1, 1 novembre 1966 (1966-11-01), pages 1-21, XP001440458,**

**Description**

**DOMAINE TECHNIQUE**

L'invention se rapporte au domaine de l'instrumentation nucléaire et de l'identification d'isotope radioactif au moyen d'un système de mesure de rayonnements ionisants, et concerne plus particulièrement les systèmes de mesure utilisant des détecteurs à faible densité tels que les scintillateurs plastiques.

**ÉTAT DE LA TECHNIQUE ANTÉRIEURE**

Que ce soit pour les contrôles de sécurité dans les aéroports ou dans certains lieux sensibles, ou encore pour les contrôles douaniers dans les ports de commerce, le développement de détecteurs d'isotopes radioactifs qui soient à la fois sensibles, de grandes tailles et à coûts raisonnables fait généralement appel à des scintillateurs à faible densité tel que les scintillateurs plastiques.

En effet, ce type de scintillateur, appelé également scintillateur organique, présente l'avantage de fournir un volume de détection important pour des coûts raisonnables. Ces scintillateurs autorisent ainsi le développement de détecteurs dont la taille et la sensibilité sont suffisantes pour inspecter l'intérieur de conteneur sans avoir à les vider. Il est donc possible, même dans le contexte industriel des grands ports de commerce, de surveiller l'importation de produits radioactifs prohibés.

Néanmoins, le développement de système de mesure de rayonnements ionisants utilisant les scintillateurs à faible densité reste limité en raison d'inconvénients importants. En effet, les spectres en énergie fournis par ces systèmes de mesure présentent une résolution spectrale particulièrement dégradée, et qui l'est d'autant plus que les détecteurs utilisés sont majoritairement sensibles aux phénomènes de la diffusion Compton. Ainsi, l'interprétation de ces spectres afin de déterminer la présence d'un isotope particulier reste difficile et de ce fait ce type de système de mesure est généralement utilisé pour la détection de matière radioactive sans identification du type d'isotope. Ainsi, avec de tels systèmes, il n'est pas rare que la présence de radiations naturelles, telles que dans les matériaux naturellement radioactif connus sous leur sigle anglais NORM pou Naturally Occurring Radioactive Material, puissent occasionner des faux positifs.

Pour remédier à ces inconvénients, il est connu de mettre en place des procédés d'identification de spectres pour éliminer les faux positifs. On peut ainsi citer par exemple les travaux d'Ely. J. et de ses co-auteurs qui ont été publiés dans la revue scientifique « Journal of Radioanalytical and Nuclear Chemistry » Volume 276 numéro 3 page 743 à 748 publiée en 2008 et qui concernent un procédé d'analyse de spectres de scintillation pour discriminer l'origine des radiations détectées.

Ce procédé développé par Ely J. et ses co-auteurs consiste à effectuer une mesure de spectrométrie à scintillation et à découper le spectre ainsi obtenu en deux fenêtres de mesure, l'une correspondant aux basses énergies et l'autre correspondant aux hautes énergies. Le spectre est alors intégré sur chacune des fenêtres pour déterminer un nombre d'incidences des radiations de basse énergie et un nombre d'incidences des radiations de haute énergie et calculer le rapport entre ces deux nombres d'incidences. En effet, Ely J. et ses co-auteurs ont démontré que si la quantité de radiations mesurée ne permettait pas de discriminer les radiations d'origine naturelle de celles d'origine de produits radioactifs prohibés, le rapport entre le nombre d'incidence des radiations de hautes énergies avec celui de basses énergies est par contre plus spécifique.

On entend ci-dessus et dans le reste de ce document par nombre d'incidences à une énergie donnée, le nombre de particules, tels que des photons, gamma, neutrons ou encore particules alpha, détectées avec ladite énergie. Par extension, le nombre d'incidences dans une plage d'énergie, telle que celle des radiations de haute énergie, et la quantité de radiation mesurée, s'entendent respectivement comme étant le nombre de particules détectées dans ladite plage d'énergie et dans la plage de mesure.

Ainsi, un tel procédé permet par ce calcul de rapport d'incidence de supprimer une part importante des faux positifs et ainsi d'identifier la présence de certains types de produits radioactifs prohibés qui présentent des rapports d'incidence spécifiques. Néanmoins, si un tel procédé est relativement simple à mettre en œuvre, il ne permet d'identifier la présence que d'une part des isotopes sans pour autant permettre l'identification précise de l'isotope détecté.

Il est également connu, notamment par les travaux de Tom Burr et de ses co-auteurs publiés dans la revue scientifique « International Journal of Research and Reviews in Applied Science » volume 17 issue 1 pages 1-8, de résoudre ce problème en effectuant une comparaison de motifs au moyen de réseaux de neurones. Un tel procédé permet, après une longue phase d'apprentissage aux moyens d'un grand nombre de spectres d'isotopes de référence, d'obtenir une identification d'isotopes.

Néanmoins, un tel procédé n'est pas toujours approprié. En effet, il est relativement long à mettre en place en raison de la phase d'apprentissage et une simple perturbation de l'environnement de mesure, telle qu'un blindage partiel, peut, par la modification des motifs du spectre qu'elle occasionne, compromettre l'identification.

US2007108379 divulgue une méthode d'identification d'une source ou d'une signature gamma en temps réel. Le document divulgue également un système utilisant l'analyse des composants principaux (PCA) pour chercher, identifier ou caractériser une signature inconnue parmis les signatures dans la librairie.

US2005029460 divulgue un procédé de détection gamma pour surveiller une source radioactive sur ou dans un véhicule de trafic. Le détecteur gamma comprend un processeur pour la réjection du rayonnement de fond naturel (NBR). La technique se fonde sur l'interaction du rayonnement gamma dans un scintillateur organique plastique par diffusion Compton.

WO2014016550 divulgue un spectrometre gamma, comprennant entre outre un scintillateur plastique pour l'identification et la surveillance des sources gamma dans un environnement. Les caractéristiques dans le spectre d'énergie sont comparées avec les énergies obtenues par calibration. Détermination of nuclide concentrations in solutions containing low levels of radioactivity by least-squares resolution of the gamma-ray spectra. E.Schonfeld, A.H.Kibbey, W.Davis Jr., Oak Ridge National Laboratory, Nuclear Instruments and Methods 45 (1966), 1-21. Le document divulgue la méthode des moindres carrés pour la détermination du montant d'un nombre d'isotopes dans les déchets radioactifs.

## EXPOSÉ DE L'INVENTION

L'invention a pour objet de résoudre au moins partiellement ces inconvénients et a ainsi pour but de fournir un procédé d'identification d'isotopes par spectroscopie à scintillation simple à mettre en place tout en étant robuste pour permettre une identification de l'isotope même en présence de perturbation de l'environnement.

L'invention vise plus particulièrement les systèmes de mesure de rayonnements ionisants utilisant des scintillateurs à faible densité tels que les scintillateurs plastiques.

A cet effet, l'invention concerne un procédé d'identification d'un isotope présent dans un milieu à caractériser selon la revendication 1.

Un tel procédé de détection permet à partir de spectres de référence d'obtenir une identification de l'isotope même lorsqu'il est placé dans un environnement perturbé, tel qu'en présence d'un blindage. En effet, il permet à partir d'un nombre de mesures important, fourni par les fenêtres de mesure, d'identifier l'isotope de référence dont l'identité s'approche le plus de l'isotope à identifier. Ainsi même en environnement perturbé, la détermination des coefficients d'identité est dégradée, cette dégradation étant sensiblement identique pour l'ensemble des coefficients d'identité, l'identification reste possible. Ce procédé permet donc de fournir une identification d'isotope simple et robuste même avec des systèmes de mesure de rayonnements ionisants utilisant des détecteurs ayant, intrinsèquement, une faible résolution en énergie tels que les scintillateurs à faible densité.

De plus, avec la dépendance de la largeur fenêtres de mesure, il est possible de prendre le compte des particularités liées à la caractérisation de chacun des isotopes de référence et de prendre en compte c'est même particularité lors de la comparaison entre le spectre mesuré et les spectres de référence. En effet, la comparaison entre le spectre mesuré et l'un des spectres de référence est réalisée sur la base des mêmes fenêtres de mesure. De cette manière, il est possible d'optimiser la reconnaissance de l'isotope à identifier en prenant notamment en compte les problèmes spécifiques à chaque isotope de référence, tels que la présence de la crête Compton.

Le système de mesure peut être du type utilisant des scintillateurs à faible densité tels que les scintillateurs plastiques,

l'étape E3 de détermination de fenêtres de mesure pour chaque isotope de référence pouvant comprendre les sous-étapes suivantes :

- E31 détermination à partir du spectre de référence de l'isotope de référence d'une largeur de crête Compton,
- E32 détermination à partir de la valeur de la largeur de crête Compton déterminée d'une largeur de fenêtre, la largeur de fenêtre étant préférentiellement égale à la largeur de crête Compton.

L'utilisation de la largeur de crête Compton permet de prendre en compte les phénomènes de diffusion Compton indépendamment pour chacun des isotopes de référence. En effet, la crête Compton est parfaitement représentative de la perte de résolution liée à la diffusion Compton. On obtient ainsi, pour chacun des isotopes de référence, des fenêtres de mesure offrant des valeurs parfaitement représentatives car prenant en compte la perte de résolution inhérente au phénomène de diffusion Compton.

La sous-étape E31 de détermination d'une largeur de crête Compton peut consister en :

- E31 la détermination dans le spectre de référence d'une plage d'énergie présentant une dérivée minimale, la largeur de ladite plage en énergie correspondant à la largeur de crête Compton.

L'étape de détermination de fenêtres de mesure pour chaque isotope de référence dans le spectre de référence dudit isotope peut comprendre, après au moins une sous étape de fixation ou de détermination d'une largeur de fenêtre, les sous-étapes suivantes :

- E33 définition de N points de mesure dans ledit spectre de référence, N étant un entier supérieur ou égal 2, lesdits points de mesure étant préférentiellement communs à l'ensemble des isotopes de référence,
- E34 détermination pour chacun des points de mesure d'une fenêtre de mesure centrée sur ledit point de mesure et dont la largeur est la largeur de fenêtre préalablement fixée.

Avec une telle détermination des fenêtres de mesure, il est possible d'obtenir pour chacun des isotopes N valeurs de référence qui peuvent être assimilées aux N coordonnés d'un vecteur d'identification. On peut ainsi obtenir une représentation facilitant la comparaison avec le spectre mesuré.

L'étape E6 de délimitation dans le spectre mesuré de fenêtres de mesure et de calcul pour chacune des fenêtres de mesure d'une valeur d'écart peut comporter pour chacun des isotopes de références les sous étapes suivantes :

- E61 soustraction au spectre mesuré du spectre de référence de l'isotope de référence,
- E62 mise au carré du spectre ainsi soustrait,
- E63 pour chacune des fenêtres de mesure, intégration sur la fenêtre de mesure du spectre ainsi soustrait et mis au carré de manière à calculer la valeur d'écart pour ladite fenêtre de mesure.

Le coefficient d'identité peut être un coefficient de dissemblance MaxD et l'étape E7 de détermination du coefficient de dissemblance MaxD peut consister en :

- E7 un calcul d'un coefficient de dissemblance MaxD vis-à-vis dudit isotope de référence égal à la valeur maximale atteinte par les valeurs d'écart 21 calculées pour ledit isotope de référence,

l'étape E8 consistant alors en :

- E8 l'identification parmi les coefficients de dissemblance déterminés MaxD celui qui est le plus petit, l'isotope présent dans le milieu à caractériser étant identifié comme étant identique à l'isotope de référence auquel correspond ce coefficient de dissemblance le plus petit.

Le coefficient d'identité peut être un coefficient de ressemblance MD et dans lequel l'étape E7 de détermination du coefficient de ressemblance MD peut consister en :

- E7 un calcul d'un coefficient de ressemblance MD vis-à-vis dudit isotope de référence égal à l'inverse de la valeur maximale atteinte par les valeurs d'écart calculées pour ledit isotope de référence à laquelle il a été préalablement ajouté une constante de calcul strictement positive,

l'étape E8 consistant alors en :

- E8 l'identification parmi les coefficients de ressemblance déterminés MD celui qui est le plus grand, l'isotope étant identifié comme étant identique à l'isotope de référence auquel correspond ce coefficient de ressemblance le plus grand.

De tels coefficients de dissemblance et de ressemblance permettent une comparaison aisée pour identifier le spectre de référence auquel l'isotope à identifier correspond. En effet, une simple comparaison de coefficients permet ainsi d'identifier l'isotope présent dans le milieu à caractériser. On évite ainsi la complexité des systèmes à réseaux neuronaux utilisés dans l'art antérieur.

L'étape E8 d'identification de l'isotope peut être une étape d'identification de l'isotope majoritaire et il peut en outre être prévu une étape E9 supplémentaire d'identifications d'au moins un autre isotope.

L'étape E9 d'identification d'au moins un autre isotope comprend les sous étapes suivantes :

- E91 fixation d'une valeur seuil de coefficient d'identité,
- E92 détermination, par comparaison des coefficients de d'identité déterminées lors de l'étape E7 à ladite valeur seuil de coefficient d'identité, quels sont le ou les autres isotopes présents dans le milieu à caractériser autre que celui identifié à l'étape E8.

Avec de telles étapes E9, il est possible d'identifier la majorité des isotopes se trouvant dans le milieu à caractériser.

Il peut être prévu une étape E4' consistant à :

- E4' détection de la présence d'au moins un isotope dans le milieu à caractériser.

Une telle étape E'4 permet de rendre le procédé autonome puisqu'il peut être mis en œuvre même sur des milieux à caractériser dans lesquels la présence d'un isotope radioactif n'est que soupçonnée.

L'invention concerne également un dispositif de d'identification d'isotopes selon la revendication 11.

Un tel dispositif d'identification d'isotopes, en la mise en œuvre d'un procédé selon l'invention, permet de bénéficier des avantages liés à l'invention.

L'invention concerne également un programme d'ordinateur selon la revendication 12.

Un tel programme permet de bénéficier des avantages liés au procédé de l'invention avec une implémentation simple.

## BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :

- la figure 1 illustre un exemple de spectres de référence et mesuré et les valeurs d'écart obtenues lors de la mise en œuvre d'un procédé selon l'invention,
- la figure 2 illustre schématiquement un système de mesure utilisant des détecteurs à scintillation permettant la mise en œuvre d'un procédé selon l'invention,
- la figure 3 est un ordinogramme présentant les principales étapes et sous-étapes du procédé selon l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes) doivent être comprises comme n'étant pas exclusives les unes des autres et peuvent se combiner entre elles.

## EXPOSÉ DÉTAILLÉ DE MODES DE RÉALISATION PARTICULIERS

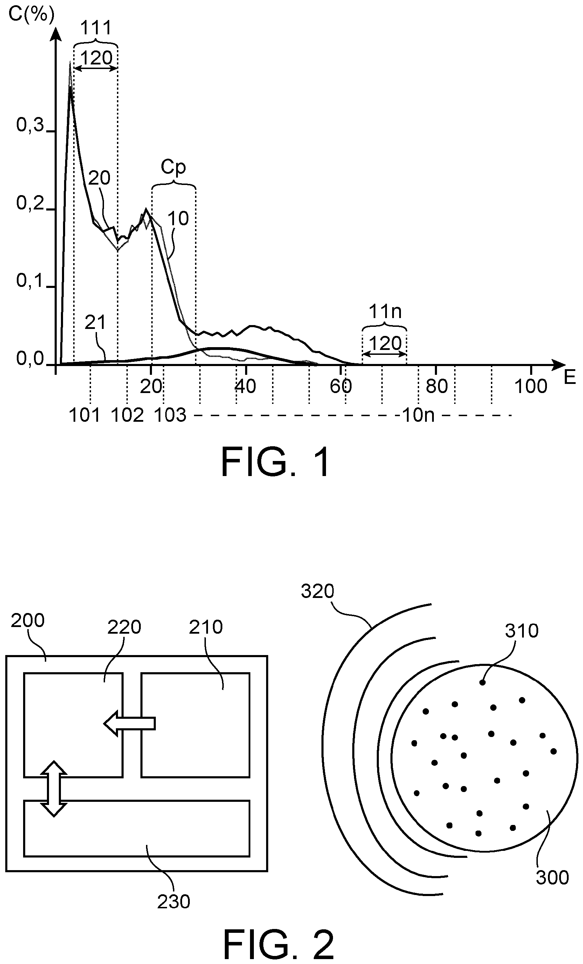

La figure 1 illustre deux exemples de spectres en énergie obtenus grâce à un système de mesure de rayonnements ionisants résolu en énergie utilisant des scintillateurs plastiques, le premier étant un spectre de référence 10 mesuré sur un isotope de référence, l'autre étant un spectre mesuré 20 d'un isotope 310 à identifier présent dans un milieu à caractériser 300, tel qu'un conteneur ou l'intérieur d'une chambre d'analyse d'un système d'analyse de bagages, au moyen d'un procédé d'identification selon l'invention.

Un tel procédé d'indentification est destiné à être mis en œuvre au moyen d'un système de mesure 200 de rayonnements ionisants. Ce procédé d'identification est particulièrement adapté pour les systèmes de mesure de rayonnements ionisants du type qui utilise des détecteurs à faible densité tels que les scintillateurs plastiques ou encore à liquides organiques qui sont soumis à l'effet Compton. Ce type de scintillateur est plus généralement connu sous la dénomination de scintillateur organique.

Bien entendu, ce procédé d'indentification ne se limite pas à une mise en œuvre sur un système de mesure 200 de rayonnements ionisants du type qui utilise des détecteurs à faible densité, il peut également être mis en œuvre sur un système de mesure de rayonnements ionisants résolu en énergie n'utilisant pas le principe de la scintillation tel que ceux mettant en œuvre une photocathode.

Un tel système de mesure 200 comprend généralement, comme schématisé sur la figure 2, un milieu de scintillation 210 qui présente des propriétés de fluorescence avec les rayonnements radioactifs 320 et un photomultiplicateur 220 adapté pour détecter le rayonnement de fluorescence issus du milieu de scintillation, le photomultiplicateur 220 étant couplé à un dispositif permettant de représenter l'énergie déposé dans le milieu de scintillation 210.. Le système de mesure 200 comporte en outre une unité de commande et de contrôle 230 adaptée pour commander et contrôler le photomultiplicateur pour la mise en œuvre du procédé d'identification selon l'invention.

Selon une configuration classique, l'unité de commande et de contrôle 230 peut être un ordinateur configuré au moyen d'un programme informatique. Un tel programme informatique comporte des instructions pour l'exécution du procédé selon l'invention lorsqu'il est exécuté sur l'ordinateur.

Pour aboutir à l'identification de l'isotope 310 présent dans le milieu à caractériser à partir dudit spectre mesuré 20, le procédé d'identification comporte, comme illustré sur la figure 2, les étapes E1 à E8 selon la première revendication.

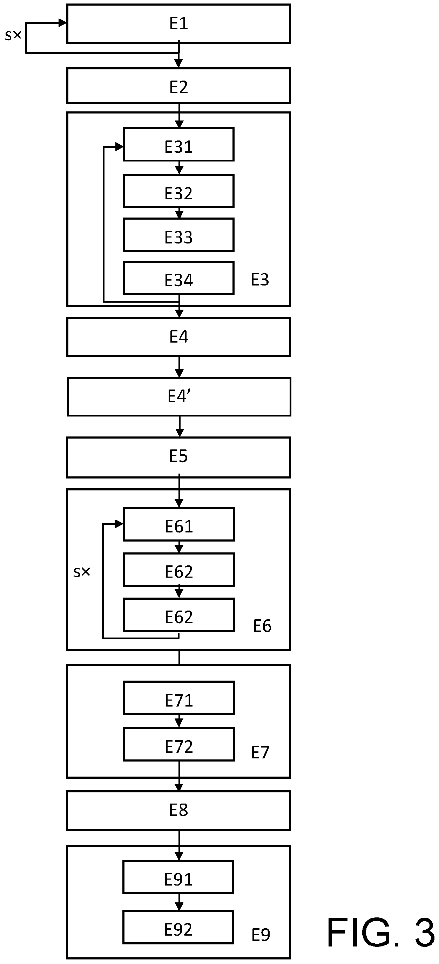

Lors de l'étape E1 les isotopes de référence sont des isotopes qui ont été préalablement identifiés comme étant susceptibles d'être présents dans le milieu à caractériser. Ainsi, les isotopes de référence peuvent être, par exemple, l'isotope 137 du césium, 137Cs, l'isotope 60 du colbalt, 60Co, l'isotope 22 du sodium, 22Na, l'isotope 241 de l'américium, 241Am, ou encore l'isotope 57 du cobalt, 57Co. Pour chacun des isotopes de référence sélectionnés, au moins un spectre de référence est réalisé. Comme illustré sur l'ordinogramme de la figure 3, pour S isotopes de référence, l'étape E1 est mis en œuvre S fois afin d'obtenir au moins un spectre de référence de chacun des isotopes de référence.

Lorsqu'il est prévu de faire plusieurs spectres de référence pour chacun des isotopes de référence, les spectres de référence d'un même isotope de référence sont combinés ensemble afin d'en obtenir un seul. Cette combinaison des spectres de référence peut, par exemple et de manière simple, être réalisé en moyennant les spectres de référence ensemble. On peut noter que, en variante, cette combinaison peut être réalisée après l'étape de normalisation E2.

Les spectres de références réalisés sont, lors de l'étape E2, normalisés de manière à assurer une identification qui soit peu sensible à la quantité d'isotopes dans le milieu à caractériser. Cette normalisation peut être réalisée suivant l'équation suivante :

$$(1) \quad C_{nor}(x) = \frac{C(x)}{\sqrt{\int C(t)^2 \, dt}}$$

avec $C_{nor}(x)$ le nombre d'incidences normalisé à l'énergie x, $C(x)$ le nombre d'incidence à l'énergie x, et $\int C(t)^2 \, dt$ l'intégral du nombre d'incidence au carré sur la plage entière du spectre d'énergie.

On peut noter que dans un cadre pratique, le spectre étant numérisé avec un nombre d'échantillons K, l'équation (1) peut également s'écrire :

$$(2) \quad C_{nor}(k) = \frac{C(k)}{\sqrt{\sum_{i=0}^{K} C(i)^2}}$$

Avec k un incrément d'énergie donné compris entre 0 et K, Cnor(k) le nombre d'incidences normalisé pour l'incrément k, C(k) le nombre d'incidence pour l'incrément k et $\sum_{i=0}^{K} C(i)^2$ la somme des nombres d'incidences au carré sur toute la plage de mesure.

Une fois les spectres normalisés, l'étape de E3 permet, pour chacun des isotopes de référence de définir des fenêtres de mesure 111, 11n.

Selon une première possibilité de l'invention, les fenêtres de mesure 111, 11n peuvent être identiques pour l'ensemble des spectres de référence. Selon cette possibilité, l'étape E3 comporte les sous-étapes suivantes :

- définition d'une largeur de fenêtre 120 commune,
- définition de N points de mesure 101, 102, 103, 10n dans ledit spectre de référence 10, N étant un entier supérieur ou égale 2, lesdits points de mesure 101, 102, 103, 10n étant communs à l'ensemble des isotopes de référence
- détermination pour chacun des points de mesure 101, 102, 103, 10n d'une fenêtre de mesure 111, 11n centrée sur ledit point de mesure 101, 102, 103, 10n et dont la largeur est la largeur de fenêtre.

Selon une deuxième possibilité de l'invention, qui est particulièrement avantageuse, les largeurs de fenêtre d'énergie différentes peuvent être définies pour chacun des spectres de référence. Afin de tenir compte de l'effet Compton, cette largeur de spectre est préférentiellement définie en fonction de la largeur de crête Compton Cp et peut être ainsi par exemple égale à cette largeur de crête Compton Cp.

La crête Compton, comme illustré sur la figure 1, peut être détectée sur un spectre en énergie par la forte pente de son front descendant. Ainsi, la largeur de la crête Compton est généralement calculée en déterminant le long du spectre une plage d'énergie pour laquelle la dérivée moyenne est minimale, la largeur correspondant à la largeur de cette pente. Il est à noter que dans l'exemple donné sur la figure 1, le premier pic visible à basse énergie (au niveau de la fenêtre 111) n'est pas lié au phénomène de diffusion Compton et n'est donc pas pris en compte pour la mesure de la largeur de crête Compton.

Ainsi dans la pratique une sous-étape de détermination d'une largeur de crête Compton consistera à effectuer les opérations suivantes :

- définition d'un pas de mesure en énergie sur lequel peut être déterminé une dérivée moyenne,
- détermination le long du spectre la variation de la dérivée moyenne sur le pas de mesure en énergie, le premier pic pouvant être exclu en fonction du type de système de mesure 200 de rayonnements ionisants,

- détermination de la dérivée moyenne minimale, celle-ci correspondant au front descendant de la crête Compton, la largeur correspondant à la différence d'énergie entre les valeurs en énergie se trouvant de part et d'autre de la dérivée moyenne minimale correspondant à une annulation de la dérivée (c'est-à-dire une inversion de pente).

Ainsi l'étape E3, selon cette deuxième possibilité de l'invention, peut comporter les sous étapes suivantes :

- E31 détermination à partir du spectre de référence 10 de l'isotope de référence d'une largeur de crête Compton Cp,
- E32 détermination à partir de la valeur de la largeur de crête Compton Cp déterminée d'une largeur de fenêtre 120, la largeur de fenêtre 120 étant préférentiellement égale à la largeur de crête Compton Cp,
- E33 définition de N points de mesure 101, 102, 103, 10n dans ledit spectre de référence 10, N étant un entier supérieur ou égale 2, lesdits points de mesure 101, 102, 103, 10n étant communs à l'ensemble des isotopes de référence,
- E34 détermination pour chacun des points de mesure 101, 102, 103, 10n d'une fenêtre de mesure 111, 11n centrée sur ledit point de mesure 101, 102, 103, 10n et dont la largeur est la largeur de fenêtre 120.

Ainsi pour un point n correspondant à l'énergie $E_{10n}$ et une largeur de fenêtre 120 d'énergie $E_{120}$, la fenêtre de mesure correspondante correspond à la plage d'énergie allant de $E_{10n} - E_{120/2}$ à $E_{10n} + E_{120/2}$.

Comme indiqué sur l'organigramme de la figure 3, les étapes E31 à E34 sont effectuées pour chacun des isotopes de références. Pour un nombre S d'isotopes de référence, les étapes E31 à E34 sont répétées S fois.

La figure 1 illustre la mesure de la largeur de crête Compton Cp pour un spectre de référence, ici le spectre de l'isotope 137 du Césium. Comme le montre cette même figure, les fenêtres de mesures 111, 11n qui ont étaient définies avec les N points 101, 102, 103, 10n présentent une largeur de fenêtre égale à la largeur de crête Compton Cp mesurée.

Après mesure du spectre du milieu à caractériser à l'étape E4, le spectre mesuré est ensuite normalisé à l'étape E5. Cette normalisation du spectre mesuré peut être réalisée sur la base des équations (1) et (2) de manière identique à la normalisation des spectres de référence à l'étape E2.

Le spectre mesuré normalisé est ensuite lors de l'étape E6 comparé avec chacun des spectres de référence. Pour un isotope de référence donné, cette comparaison est réalisée pour chacune de ses fenêtres de mesure 111, 11n déterminées à l'étape E3 afin de déterminer pour chacune d'elles une valeur d'écart 21. Ainsi avec un nombre de fenêtres de mesure N, la comparaison va permettre d'obtenir pour chacun des isotopes un vecteur d'écart à N dimension (non illustré).

La comparaison entre le spectre mesuré normalisé et l'un des spectres de référence normalisé peut être réalisée au moyen des sous-étapes suivantes :

- E61 soustraction au spectre mesuré 20 du spectre de référence 10 de l'isotope de référence,
- E62 mise au carré du spectre ainsi soustrait,
- E63 pour chacune des fenêtres de mesure 111, 11n, intégration sur la fenêtre de mesure 111, 11n du spectre ainsi soustrait et mis au carré de manière à obtenir la valeur d'écart 21 pour ladite fenêtre de mesure 111, 11n.

Ces sous étapes E61 à E63 consistent ainsi à calculer pour chacune des fenêtres de mesure de l'un des isotopes de référence la valeur d'écart 21 en suivant l'équation ci-dessous :

$$(3) \quad D(n) = \int_{E_{10n}-E_{120}/2}^{E_{10n}+E_{120}/2} (C_{m\_nor}(x) - C_{nor}(x))^2 \, dx$$

Avec D(n) la valeur d'écart 21 pour ledit isotope de référence pour la fenêtre de mesure n, $C_{m\_nor}(t)$ le nombre d'incidences normalisé à l'énergie t pour le spectre de mesure, $C_{nor}(t)$ le nombre d'incidences normalisé à l'énergie t pour le spectre de référence normalisé, $E_{10n}$ l'énergie correspondant au point n et $E_{120}$ la largeur de spectre déterminée pour ledit isotope de référence. Plus généralement, les valeurs $E_{10n}-E_{120/2}$ et $E_{10n}+E_{120/2}$ peuvent être remplacées respectivement pas les bornes basse et haute énergie de la fenêtre de mesure n.

On peut noter que dans un cadre pratique, le spectre étant numérisé avec un nombre d'échantillons d'énergie K, l'équation (3) peut également s'écrire :

$$(4) \quad D(n) = \sum_{i=\frac{n \cdot K}{N}-L/2}^{\frac{n \cdot K}{N}+L/2} (C_{m\_nor}(i) - C_{nor}(i))^2,$$

avec D(n) la valeur d'écart pour ledit isotope de référence pour la fenêtre de mesure n, $C_{m\_nor}(i)$ le nombre d'incidences normalisé à l'incrément d'énergie i pour le spectre de mesure, $C_{nor}(i)$ le nombre d'incidences normalisé à l'incrément d'énergie i pour le spectre de référence, N le nombre de fenêtre et L la largeur de fenêtre 120 en nombre d'incrément, cette dernière étant un entier pair.

Ainsi cette étape E6 permet pour chaque isotope de référence de définir N valeurs d'écart entre le spectre de référence correspondant 20 et le spectre mesuré 10. Les étapes E61 à E63 sont reproduites pour chaque isotope de référence. De cette façon, pour un nombre d'isotopes de référence égal à S, les étapes E61 à E63 sont réalisées S fois.

La figure 1 illustre le résultat d'un tel calcul de valeurs d'écart 21 pour un spectre de référence 10 correspondant à l'isotope 137 du césium et un spectre mesuré 20 inconnu, les valeurs d'écart 21 calculées étant représentées sous la forme d'une courbe.

Les valeurs d'écart 21 étant calculées pour chaque isotope de référence, l'étape E7 permet de déterminer à partir de ces dernières le coefficient d'identité.

Ce coefficient d'identité peut être selon ce mode de réalisation de l'invention, un coefficient de dissemblance MaxD déterminé pour chacun des isotopes de référence à partir des valeurs d'écart D(n). Ce coefficient de dissemblance MaxD peut être par exemple égal à la valeur maximale atteinte par les valeurs d'écart calculées

Mathématiquement, le calcul de coefficient peut être réalisé suivant l'équation suivante :

$$(1) \quad MaxD = Max\{D(1),...D(n)..., D(N)\}$$

De cette manière, l'isotope de référence présentant le coefficient de dissemblance le plus faible sera celui présentant une valeur d'écart maximale qui est minimale.

Ainsi avec un tel coefficient de dissemblance MaxD, l'étape E8 de détection consiste à identifier parmi les coefficients de dissemblance déterminés MaxD celui qui est le plus petit, l'isotope présent dans le milieu à caractériser pouvant être identifié comme étant l'isotope de référence auquel correspond ce coefficient de dissemblance le plus petit.

Selon une variante de l'invention, le coefficient d'identité peut être un coefficient de ressemblance MD déterminé pour chaque isotope de référence. Un tel coefficient de ressemblance MD peut être calculé à l'étape E7 selon l'équation suivante :

$$(6) \quad MD = \frac{1}{d + Max\{D(1),...D(n),...,D(N)\}}$$

d étant une constante de calcul strictement positive et préférentiellement de valeur relativement faible vis-à-vis des valeurs d'écart attendues. Typiquement d peut être égale à 0,001. Cette constante de calcul permet d'éviter d'obtenir un calcul du coefficient de dissemblance faisant intervenir une division par O.

Selon cette variante, l'isotope qui présente le coefficient de ressemblance MD le plus élevé sera celui présentant la valeur d'écart maximale qui est minimale.

Ainsi avec un tel coefficient de ressemblance MD, l'étape E8 de détection consiste à identifier parmi les coefficients de ressemblance MD déterminés celui qui est le plus élevé, l'isotope présent dans le milieu à caractériser pouvant être identifié comme étant l'isotope

 **EP 3 210 045 B1**                 14

de référence auquel correspond ce coefficient de ressemblance le plus élevé.

Une fois l'isotope présent dans le milieu identifié, le procédé peut également permettre d'identifier le ou les autres isotopes présents dans le milieu à caractériser. Dans ce cas, l'étape E8 d'identification de l'isotope est une étape d'identification de l'isotope majoritaire et le procédé comporte en outre une étape E9 supplémentaire d'identifications d'autres isotopes.

Une telle étape E9 comporte les sous-étapes suivantes :

- E91 fixation d'une valeur seuil de coefficient d'identité,
- E92 détermination par comparaison des coefficients d'identité déterminés lors de l'étape E7 à ladite valeur seuil de d'identité, quels sont les autres isotopes présents dans le milieu à caractériser autre que celui identifié à l'étape E8.

Selon une première possibilité de l'invention, la valeur seuil de coefficient d'identité peut être une valeur prédéfinie. Selon cette première possibilité, lorsque le coefficient d'identité est le coefficient de dissemblance MaxD, les autres isotopes identifiés comme étant présents dans le milieu à caractériser sont ceux présentant un coefficient supérieur à la valeur seuil prédéfinie. Selon cette même possibilité de l'invention, lorsque le coefficient d'identité est un coefficient de ressemblance MD calculé selon l'équation (6), les autres isotopes identifiés comme étant présents dans le milieu à caractériser sont ceux présentant un coefficient de ressemblance MD inférieur à la valeur seuil prédéfinie.

Selon une deuxième possibilité de l'invention, la valeur seuil de coefficient d'identité peut être fixée sur la base du coefficient d'identité obtenue pour l'isotope référence identifié comme étant majoritaire dans le milieu à caractériser. Selon cette première possibilité, lorsque le coefficient d'identité est le coefficient de dissemblance, la valeur seuil de coefficient d'identité peut être fixée la base de l'équation suivante :

$$(7)\quad MaxD_{seuil} = 2 \cdot \min(MaxD)$$

avec MaxD$_{seuil}$ la valeur seuil de coefficient d'identité, MaxD l'ensemble des valeurs de coefficient de dissemblance obtenues pour les isotopes de référence, min(MaxD) étant ainsi le coefficient de dissemblance de l'isotope de référence identifié comme isotope majoritaire. Les autres isotopes identifiés comme étant présents dans le milieu à caractériser 300 sont ceux présentant un coefficient de dissemblance inférieur à la valeur seuil de coefficient d'identité calculée à partir de l'équation (7).

Selon cette même deuxième possibilité, lorsque le coefficient de d'identité est un coefficient de ressemblance MD calculé selon l'équation (6), la valeur seuil de coefficient d'identité peut être fixée sur la base de

l'équation suivante :

$$(8)\quad MD_{seuil} = \frac{\max(MD)}{2},$$

avec MD$_{seuil}$ la valeur seuil de coefficient d'identité, MD l'ensemble des valeurs de coefficient de ressemblance obtenues pour les isotopes de référence, max(MD) étant ainsi le coefficient de ressemblance de l'isotope de référence identifié comme isotope majoritaire, les autres isotopes identifiés comme étant présents dans le milieu à caractériser sont ceux présentant un coefficient de ressemblance supérieur à la valeur seuil de coefficient d'identité MD$_{seuil}$ calculée à partir de l'équation (8).

Selon une possibilité de l'invention, le procédé d'identification peut également être un procédé de détection de la présence d'un isotope dans le milieu à caractériser. Selon cette possibilité, comme cela est illustré sur l'ordinogramme de la figure 3, le procédé comporte une E4' suivante :

- E4' détection de la présence d'au moins un isotope dans le milieu à caractériser.

Cette étape E4' peut consister, par exemple, à détecter à partir du spectre mesuré la présence d'un nombre d'incidences supérieur à un seuil prédéterminé sur la totalité du spectre d'énergie ou sur une ou plusieurs portions de spectre données. De cette manière, l'identification de l'isotope dans le milieu à caractériser ne sera réalisée que lorsque la présence d'un isotope est avérée.

L'enchainement des étapes décrit ci-dessus et dans l'ordinogramme de la figure 3 peut être autre sans que l'on sorte du cadre de l'invention. Ainsi, par exemple, les étapes E1, E2 et E3, dans une réalisation classique de l'invention, sont préalables à l'étape E4 et l'étape E4'. Il est également envisageable, sans que l'on sorte de l'invention, qu'elles aient lieu postérieurement aux étapes E4 et E4'.

De même, le coefficient d'identité représente dans le mode de réalisation et de manière préférentielle, un coefficient de dissemblance qui est maximal lorsque l'isotope à identifier se différencie d'un isotope de référence. Il est néanmoins également envisageable, comme montré par la variante de l'invention décrite plus haut et ceci sans que l'on sorte du cadre de l'invention, que le coefficient d'identité soit un coefficient de ressemblance qui est minimal lorsque l'isotope à identifier se différencie d'un isotope de référence. Ainsi, par coefficient d'identité, il faut entendre un coefficient qui permet de caractériser la dissemblance ou la ressemblance de l'isotope à identifier vis-à-vis d'un isotope de référence donné quelle que soit la règle de variation de ce coefficient d'identité en fonction de la dissemblance entre ledit isotope à identifier et l'isotope de référence

Bien entendu, pour un fonctionnement optimal du procédé d'identification les mesures de spectres de scintillation des étapes E1 et E4 sont réalisées avec une configuration du système de mesure 200 sensiblement identique.

**Revendications**

1. Procédé d'identification d'un isotope présent dans un milieu à caractériser par un système de mesure (200) de rayonnements ionisants résolue en énergie, le procédé d'identification comportant les étapes suivantes :

   - E1 mesure d'au moins un spectre de référence (10) pour au moins deux isotopes de référence,
   - E2 normalisation des spectres de référence (10),
   - E3 délimitation pour chaque isotope de référence de fenêtres de mesure (111, 11n) dans le spectre de référence (10) dudit isotope, la largeur des fenêtres de mesure (111, 11n) étant dépendante dudit spectre de référence (10) de l'isotope de référence,
   - E4 mesure d'un spectre mesuré (20) sur le milieu à caractériser,
   - E5 normalisation du spectre mesuré (20),
   - E6 pour chaque isotope de référence, délimitation dans le spectre mesuré (20) de fenêtres de mesure (111, 11n) identiques à celles délimitées pour ledit isotope de référence et calcul pour chacune des fenêtres de mesure (111, 11n) d'une valeur d'écart (21) qui est représentative de l'écart entre le spectre mesuré et celui de l'isotope de référence dans ladite fenêtre de mesure (111, 11n),
   - E7 pour chaque isotope de référence, détermination à partir des valeurs d'écart (21) calculées pour ledit isotope de référence d'un coefficient d'identité,
   - E8 identification de l'isotope à partir des coefficients de d'identité déterminés.

2. Procédé d'identification selon la revendication 1, dans lequel le système de mesure (200) est du type utilisant des scintillateurs à faible densité tels que les scintillateurs plastiques, et dans lequel l'étape E3 de détermination de fenêtres de mesure (111, 11n) pour chaque isotope de référence comprend les sous-étapes suivantes :

   - E31 détermination à partir du spectre de référence (10) de l'isotope de référence d'une largeur de crête Compton (Cp),
   - E32 détermination à partir de la valeur de la largeur de crête Compton (Cp) déterminée d'une largeur de fenêtre (120), la largeur de fenêtre (120) étant préférentiellement égale à la largeur de crête Compton (Cp).

3. Procédé d'identification selon la revendication 2, dans lequel la sous-étape E31 de détermination d'une largeur de crête Compton (Cp) consiste en :

   - E31 la détermination dans le spectre de référence d'une plage d'énergie présentant une dérivée minimale, la largeur de ladite plage en énergie correspondant à la largeur de crête Compton (Cp).

4. Procédé d'identification selon l'une quelconque des revendications 1 à 3, dans lequel l'étape de détermination de fenêtres de mesure (111, 11n) pour chaque isotope de référence dans le spectre de référence (10) dudit isotope comprend, après au moins une sous étape de fixation ou de détermination d'une largeur de fenêtre (120), les sous-étapes suivantes :

   - E33 définition de N points de mesure (101, 102, 103, 10n) dans ledit spectre de référence (10), N étant un entier supérieur ou égal 2, lesdits points de mesure (101, 102, 103, 10n) étant préférentiellement communs à l'ensemble des isotopes de référence,
   - E34 détermination pour chacun des points de mesure (101, 102, 103, 10n) d'une fenêtre de mesure (111, 11n) centrée sur ledit point de mesure (101, 102, 103, 10n) et dont la largeur est la largeur de fenêtre (120) préalablement fixée.

5. Procédé d'identification selon l'une quelconque des revendications 1 à 4, dans lequel l'étape E6 de délimitation dans le spectre mesuré (20) de fenêtres de mesure (111, 11n) et de calcul pour chacune des fenêtres de mesure (111, 11n) d'une valeur d'écart (21) comporte pour chacun des isotopes de références les sous étapes suivantes :

   - E61 soustraction au spectre mesuré (20) du spectre de référence (10) de l'isotope de référence,
   - E62 mise au carré du spectre ainsi soustrait,
   - E63 pour chacune des fenêtres de mesure (111, 11n), intégration sur la fenêtre de mesure (111, 11n) du spectre ainsi soustrait et mis au carré de manière à calculer la valeur d'écart (21) pour ladite fenêtre de mesure (111, 11n).

6. Procédé d'identification selon l'une quelconque des revendications 1 à 5, dans lequel le coefficient d'identité est un coefficient de dissemblance MaxD et l'étape E7 de détermination du coefficient de dissemblance MaxD consiste en :

   - E7 un calcul d'un coefficient de dissemblance MaxD vis-à-vis dudit isotope de référence égal à la valeur maximale atteinte par les valeurs d'écart 21 calculées pour ledit isotope de référence,

l'étape E8 consistant en :

- E8 l'identification parmi les coefficients de dissemblance déterminés MaxD celui qui est le plus petit, l'isotope présent dans le milieu à caractériser étant identifié comme étant identique à l'isotope de référence auquel correspond ce coefficient de dissemblance le plus petit.

7. Procédé d'identification selon l'une quelconque des revendications 1 à 5, dans lequel le coefficient d'identité est un coefficient de ressemblance MD et dans lequel l'étape E7 de détermination du coefficient de ressemblance MD consiste en :

- E7 un calcul d'un coefficient de ressemblance MD vis-à-vis dudit isotope de référence égal à l'inverse de la valeur maximale atteinte par les valeurs d'écart calculées pour ledit isotope de référence à laquelle il a été préalablement ajouté une constante de calcul strictement positive,

l'étape E8 consistant en :

- E8 l'identification parmi les coefficients de ressemblance déterminés celui qui est le plus grand, l'isotope étant identifié comme étant identique à l'isotope de référence auquel correspond ce coefficient de ressemblance le plus grand.

8. Procédé d'identification selon l'une quelconque des revendications 1 à 7, dans lequel l'étape E8 d'identification de l'isotope est une étape d'identification de l'isotope majoritaire et dans lequel il est en outre prévu une étape E9 supplémentaire d'identifications d'au moins un autre isotope.

9. Procédé d'identification selon la revendication 8, dans lequel l'étape E9 d'identification d'au moins un autre isotope comprend les sous étapes suivantes :

- E91 fixation d'une valeur seuil de coefficient d'identité,
- E92 détermination, par comparaison des coefficients d'identité déterminées lors de l'étape E7 à ladite valeur seuil de coefficient d'identité, quels sont le ou les autres isotopes présents dans le milieu à caractériser autre que celui identifié à l'étape E8.

10. Procédé d'identification selon l'une quelconque des revendications précédentes, dans lequel il est prévu une étape E4' consistant à :

- E4' détection de la présence d'au moins un isotope dans le milieu à caractériser.

11. Un dispositif d'identification d'isotopes adapté pour l'identification d'un isotope dans un milieu à caractériser et comprenant :

- un système de mesure de rayonnements ionisants résolue en énergie adapté pour la mesure de spectres d'énergie
- une unité de commande et de contrôle configurée pour commander et contrôler le système de mesure,

le dispositif de d'identification d'isotopes **étant caractérisé en ce que** l'unité de commande et de contrôle est configurée pour commander le système de mesure afin d'effectuer un procédé d'identification selon l'une quelconque des revendications 1 à 10.

12. Programme d'ordinateur comportant des instructions pour l'exécution du procédé selon l'une quelconques des revendications 1 à 10 lorsque ledit programme est exécuté par un ordinateur formant une unité de commande et contrôle d'un système de mesure selon la revendication 11.

## Patentansprüche

1. Verfahren zum Identifizieren eines in einem Medium vorhandenen Isotops, das durch ein energieaufgelöstes Messsystem (200) für ionisierende Strahlung charakterisiert werden soll, wobei das Identifizierungsverfahren die folgenden Schritte umfasst:

- E1 Messen von mindestens einem Referenzspektrum (10) für mindestens zwei Referenzisotope,
- E2 Standardisieren von Referenzspektren (10),
- E3 für jedes Referenzisotop Eingrenzen von Messfenstern (111, 11n) im Referenzspektrum (10) des Isotops, wobei die Breite der Messfenster (111, 11n) von dem Referenzspektrum (10) des Referenzisotops abhängig ist,
- E4 Messen eines Messspektrums (20) an dem zu charakterisierenden Medium,
- E5 Standardisieren des Messspektrums (20),
- E6 für jedes Referenzisotop Eingrenzen von Messfenstern (111, 11n) in dem Messspektrum (20), die mit den für das Referenzisotop eingegrenzten identisch sind, und für jedes der Messfenster (111, 11n) Berechnen eines Abweichungswerts (21), der für die Abweichung zwischen dem Messspektrum und dem des Referenzisotops in dem Messfenster (111, 11n) repräsentativ ist,
- E7 für jedes Referenzisotop Bestimmen eines Identitätskoeffizienten ausgehend von den für das Referenzisotop berechneten Abweichungswerten (21),
- E8 Identifizieren des Isotops ausgehend von den bestimmten Identitätskoeffizienten.

2. Identifizierungsverfahren nach Anspruch 1, wobei das Messsystem (200) von dem Typ ist, bei dem Szintillatoren niedriger Dichte, wie z.B. Kunststoff-Szintillatoren, verwendet werden, und wobei Schritt E3 des Bestimmens von Messfenstern (111, 11n) für jedes Referenzisotop die folgenden Unterschritte umfasst:

   - E31 Bestimmen einer Compton-Peakbreite (Cp) aus dem Referenzspektrum (10) des Referenzisotops,
   - E32 Bestimmen einer Fensterbreite (120) ausgehend von dem bestimmten Wert der Compton-Peakbreite (Cp), wobei die Fensterbreite (120) vorzugsweise gleich der Compton-Peakbreite (Cp) ist.

3. Identifizierungsverfahren nach Anspruch 2, wobei der Unterschritt E31 des Bestimmens einer Compton-Peakbreite (Cp) besteht in:

   - E31 Bestimmen eines Energiebereichs mit einer minimalen Ableitung im Referenzspektrum, wobei die Breite des Energiebereichs der Compton-Peakbreite (Cp) entspricht.

4. Identifizierungsverfahren nach einem der Ansprüche 1 bis 3, wobei der Schritt des Bestimmens von Messfenstern (111, 11n) für jedes Referenzisotop im Referenzspektrum (10) des Isotops nach mindestens einem Unterschritt des Festlegens bzw. Bestimmens einer Fensterbreite (120) die folgenden Unterschritte umfasst:

   - E33 Definieren von N Messpunkten (101, 102, 103, 10n) in dem Referenzspektrum (10), wobei N eine ganze Zahl größer oder gleich 2 ist und die Messpunkte (101, 102, 103, 10n) vorzugsweise allen Referenzisotopen gemeinsam sind,
   - E34 Bestimmen eines Messfensters (111, 11n) für jeden der Messpunkte (101, 102, 103, 10n), das auf den Messpunkt (101, 102, 103, 10n) zentriert ist und dessen Breite die zuvor festgelegte Fensterbreite (120) ist.

5. Identifizierungsverfahren nach einem der Ansprüche 1 bis 4, wobei der Schritt E6 des Eingrenzens von Messfenstern (111, 11n) in dem Messspektrum (20) und des Berechnens eines Abweichungswerts (21) für jedes der Messfenster (111, 11n) die folgenden Unterschritte für jedes der Referenzisotope umfasst:

   - E61 Subtrahieren des Referenzspektrums (10) des Referenzisotops von dem Messspektrum (20),
   - E62 Quadrieren des so subtrahierten Spektrums,
   - E63 für jedes der Messfenster (111, 11n) Integrieren des so subtrahierten und quadrierten Spektrums auf das Messfenster (111, 11n), um den Abweichungswert (21) für das Messfenster (111, 11n) zu berechnen.

6. Identifizierungsverfahren nach einem der Ansprüche 1 bis 5, wobei der Identitätskoeffizient ein Unähnlichkeitskoeffizient MaxD ist und Schritt E7 des Bestimmens des Unähnlichkeitskoeffizienten MaxD besteht in:

   - E7 Berechnen eines Unähnlichkeitskoeffizienten MaxD in Bezug auf das Referenzisotop, der gleich dem Maximalwert ist, der von den für das Referenzisotop berechneten Abweichungswerten 21 erreicht wird,

   wobei Schritt E8 besteht in:
   E8 Identifizieren, welcher der Unähnlichkeitskoeffizienten MaxD der kleinste ist, wobei das in dem zu charakterisierenden Medium vorhandene Isotop als identisch mit dem Referenzisotop identifiziert wird, dem dieser kleinste Unähnlichkeitskoeffizient entspricht.

7. Identifizierungsverfahren nach einem der Ansprüche 1 bis 5, wobei der Identitätskoeffizient ein Ähnlichkeitskoeffizient MD ist und wobei Schritt E7 des Bestimmens des Ähnlichkeitskoeffizienten MD besteht in:

   - E7 Berechnen eines Ähnlichkeitskoeffizienten MD in Bezug auf das Referenzisotop, der gleich dem Kehrwert des Maximalwertes ist, der von den für das Referenzisotop berechneten Abweichungswerten erreicht wird und zu dem zuvor eine streng positive Berechnungskonstante hinzugefügt wurde, wobei Schritt E8 besteht in:
   - E8 Identifizieren, welcher der bestimmten Ähnlichkeitskoeffizienten der größte ist, wobei das Isotop als identisch mit dem Referenzisotop identifiziert wird, dem dieser größte Ähnlichkeitskoeffizient entspricht.

8. Identifizierungsverfahren nach einem der Ansprüche 1 bis 7, wobei Schritt E8 des Identifizierens des Isotops ein Schritt des Identifizierens des Majoritätsisotops ist und wobei ferner ein weiterer Schritt E9 des Identifizierens mindestens eines weiteren Isotops vorge-

**9.** Identifizierungsverfahren nach Anspruch 8, wobei Schritt E9 des Identifizierens mindestens eines weiteren Isotops die folgenden Unterschritte umfasst:

- E91 Festlegen eines Schwellenwertes des Identitätskoeffizienten,
- E92 Bestimmen, welche des bzw. der weiteren Isotope, außer dem in Schritt E8 identifizierten, in dem zu charakterisierenden Medium vorhanden sind durch Vergleichen der in Schritt E7 bestimmten Identitätskoeffizienten mit dem Schwellenwert des Identitätskoeffizienten.

**10.** Identifizierungsverfahren nach einem der vorstehenden Ansprüche, wobei ein Schritt E4' vorgesehen ist, der besteht in:

- E4' Erfassen des Vorhandenseins von mindestens einem Isotop in dem zu charakterisierenden Medium.

**11.** Vorrichtung zur Identifizierung von Isotopen, die für die Identifizierung eines Isotops in einem zu charakterisierenden Medium geeignet ist und enthält:

- ein energieaufgelöstes Messsystem für ionisierende Strahlung, das für die Messung von Energiespektren geeignet ist,
- eine Steuer- und Kontrolleinheit, die dazu ausgelegt ist, das Messsystem zu steuern und zu kontrollieren,

wobei die Vorrichtung zur Identifizierung von Isotopen **dadurch gekennzeichnet ist, dass** die Steuer- und Kontrolleinheit dazu ausgelegt ist, das Messsystem zu steuern, um ein Identifizierungsverfahren nach einem der Ansprüche 1 bis 10 durchzuführen.

**12.** Computerprogramm mit Anweisungen zur Durchführung des Verfahrens nach einem der Ansprüche 1 bis 10 bei Ausführung des Programms von einem Computer, der eine Steuer- und Kontrolleinheit für ein Messsystem nach Anspruch 11 bildet.

**Claims**

**1.** An identification method of an isotope present in a medium to be **characterised by** a measurement system (200) for measuring energy-resolved ionising radiations, the identification method including the following steps of:

- E1 measuring at least one reference spectrum (10) for at least two reference isotopes,
- E2 normalising the reference spectra (10),
- E3 delimiting for each reference isotope measurement windows (111, 11n) in the reference spectrum (10) of said isotope, the width of the measurement windows (111, 11n) being dependent on said reference spectrum (10) of the reference isotope,
- E4 measuring a measured spectrum (20) on the medium to be characterised,
- E5 normalising the measured spectrum (20),
- E6 for each reference isotope, delimiting in the measured spectrum (20) measurement windows (111, 11n) identical to those delimited for said reference isotope and calculating for each of the measurement windows (111, 11n) a deviation value (21) which is representative of the deviation between the measured spectrum and that of the reference isotope in said measurement window (111, 11n),
- E7 for each reference isotope, determining from the deviation values (21) calculated for said reference isotope an identity coefficient,
- E8 identifying the isotope from the determined identity coefficients.

**2.** The identification method according to claim 1, wherein the measurement system (200) is of the type using low density scintillators such as plastic scintillators, and wherein step E3 of determining measuring windows (111, 11n) for each reference isotope comprises the following sub-steps of:

- E31 determining from the reference spectrum (10) of the reference isotope a Compton peak width (Cp),
- E32 determining from the value of the determined Compton peak width (Cp) a window width (120), the window width (120) being preferentially equal to the Compton peak width (Cp).

**3.** The identification method according to claim 2, wherein the sub-step E31 of determining a Compton peak width (Cp) consists in:

- E31 determining in the reference spectrum an energy range having a minimum derivative, the width of said energy range corresponding to the Compton peak width (Cp).

**4.** The identification method according to any of claims 1 to 3, wherein the step of determining measurement windows (111, 11n) for each reference isotope in the reference spectrum (10) of said isotope comprises, after at least one sub-step of setting or determining a window width (120), the following sub-steps of:

- E33 defining N measurement points (101, 102, 103, 10n) in said reference spectrum (10), N being an integer higher than or equal to 2, said measurement points (101, 102, 103, 10n) being preferentially common to all of the reference isotopes,
- E34 determining for each of the measurement points (101, 102, 103, 10n) a measuring window (111, 11n) centred on said measurement point (101, 102, 103, 10n) and the width of which is the window width (120) set beforehand.

5. The identification method according to any of claims 1 to 4, wherein step E6 of delimiting in the measured spectrum (20) measurement windows (111, 11n) and calculating for each of the measurement windows (111, 11n) a deviation value (21) includes for each of the reference isotopes the following sub-steps of:

- E61 subtracting from the measured spectrum (20) the reference spectrum (10) of the reference isotope,
- E62 squaring the spectrum thus subtracted,
- E63 for each of the measurement windows (111, 11n), integrating on the measurement window (111, 11n) the spectrum thus subtracted and squared so as to calculate the deviation value (21) for said measurement window (111, 11n).

6. The identification method according to any of claims 1 to 5, wherein the identity coefficient is a dissimilarity coefficient MaxD and step E7 of determining the dissimilarity coefficient MaxD consists in:

- E7 calculating a dissimilarity coefficient MaxD relative to said reference isotope equal to the maximum value reached by the deviation values 21 calculated for said reference isotope,

step E8 consisting in:

- E8 identifying from the determined dissimilarity coefficients MaxD the smallest one, the isotope present in the medium to be characterised being identified as being identical to the reference isotope to which this smallest dissimilarity coefficient corresponds.

7. The identification method according to any of claims 1 to 5, wherein the identity coefficient is a resemblance coefficient MD and wherein step E7 of determining the resemblance coefficient MD consists in:

- E7 calculating a resemblance coefficient MD relative to said reference isotope equal to the inverse of the maximum value reached by the deviation values calculated for said reference isotope to which a strictly positive calculation constant has been added beforehand,

step E8 consisting in:

- E8 identifying from the determined resemblance coefficients the greatest one, the isotope being identified as being identical to the reference isotope to which this greatest resemblance coefficient corresponds.

8. The identification method according to any of claims 1 to 7, wherein step E8 of identifying the isotope is a step of identifying the major isotope and wherein is further provided a further step E9 of identifying at least one other isotope.

9. The identification method according to claim 8, wherein step E9 of identifying at least one other isotope comprises the following sub-steps of:

- E91 setting an identity coefficient threshold value,
- E92 determining, by comparing the identity coefficients determined in step E7 to said identity coefficient threshold value, which are the other isotope(s) present in the medium to be characterised other than that identified in step E8.

10. The identification method according to any of the preceding claims, wherein is provided a step E4' consisting in:

- E4' detecting the presence of at least one isotope in the medium to be characterised.

11. An identification device for identifying isotopes, which is adapted to identify an isotope in a medium to be characterised and comprising:

- a measurement system for measuring energy-solved ionising radiations adapted to measure energy spectra,
- a control and monitor unit configured to control and monitor the measurement system,

the device for identifying isotopes **being characterised in that** the control and monitor unit is configured to control the measurement system in order to perform an identification method according to any of claims 1 to 10.

12. A computer program including instructions for implementing the method according to any of claims 1 to 10, when said program is implemented by a computer forming a control and monitor unit of a measurement system according to claim 11.

FIG. 1

FIG. 2

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007108379 A
- US 2005029460 A
- WO 2014016550 A

**Littérature non-brevet citée dans la description**

- **ELY. J.** *Journal of Radioanalytical and Nuclear Chemistry,* 2008, vol. 276 (3), 743-748
- *International Journal of Research and Reviews in Applied Science,* vol. 17 (1), 1-8
- **E.SCHONFELD ; A.H.KIBBEY ; W.DAVIS JR.** Nuclear Instruments and Methods. Oak Ridge National Laboratory, 1966, vol. 45, 1-21